# EUROPEAN PATENT APPLICATION

(11) **EP 2 522 594 A1**
(43) Date of publication of application: **14.11.2012**
(21) Application number: 11003880.9
(22) Date of filing: 11.05.2011
(51) Int. Cl.: B65D 75/58, B65D 33/16

(54) **Packaging combination**

(71) Applicant: Poly-clip System GmbH & Co. KG, 65795 Hattersheim (DE)
(72) Inventor: Hanten, Jürgen, 61231 Bad Nauheim (DE)
(74) Representative: Eisenführ, Speiser & Partner

(57) **Abstract**

The present invention relates to packaging combination for accommodating and dispensing a viscous or granular filling material. The packaging combination (1) comprises a tubular casing (10) having a first end (12) and a second end 14, wherein the tubular casing (10) is partially filled with the filling material and closed at its first as well as its second end (12, 14) by a closure means (C), like a closure clip, wherein the partially filled tubular casing (10) comprises a plait-like portion (P) at its first end (12) being at least approximately free of filling material. The packaging combination (1) further comprises a dispensing device (20) having a passageway extending through the dispensing device (20) with an inlet opening (24) at its one end and a dispensing opening (28) at its other end for guiding and dispensing the filling material in a dispensing direction (D), and being attached to the first end (12) of the partially filled and closed tubular casing (10), wherein the plait-like portion (P) of the tubular casing (10) extends through the passageway and beyond the dispensing opening (28) of the dispensing device (20) such that the closure means (C) closing said first end (12) is arranged outside the dispensing opening (28).

## Description

The present invention relates to a packaging combination for accommodating and dispensing a viscous or granular filling material according to claim 1. The present invention further relates to a dispensing device according to claim 14 for being attached to a tubular casing as well as to a tubular casing according to claim 15 to which a dispensing device according to claim 13 may be attached.

In particular, the present invention relates to a packaging combination for accommodating and dispensing a viscous or granular filling material, the packaging combination comprises a tubular casing having a first and a second end, wherein the tubular casing is partially filled with filling material and closed at its first as well as its second end by a closure means, like a closure clip, and wherein the packaging combination further comprises a dispensing device.

In practice, packaging combinations comprising a tubular casing filled with filling material and closed at its ends by closure means, and a dispensing device are known. The tubular casings of said packaging combinations are filled with various pasty filling materials, e.g. food stuff, like sausage meat, or adhesives, like silicone, etc.

From EP patent application 1 988 032, a tubular or sausage-shaped packaging is known, being filled with sausage meat. The sausage-shaped product is produced by closing a tubular casing at one end, filling the sausage meat into said tubular casing and closing the filled tubular casing at its respective other end. In order to allow an easier opening of the sausage-shaped product, perforation lines including a number of weak locations are provided on the casing, along which the casing may be opened by pulling off the casing material and dispensing the sausage meat.

In US patent application 2008/0274313, a sausage-shaped product similar to that of EP 1 988 032 is disclosed. In order to allow an easier opening of the casing material, a handle in form of a tear stripe is attached to the casing, particular between the two overlapping longitudinal edges of the casing material. Two material weakenings are provided at both sides of the tear stripe facilitating the opening of the casing.

Moreover, German laid open document 38 31 225 discloses a device for dispensing the filling material stored in a tubular or bag-shaped packing. The device includes a ridgid tube having a dispensing nozzle at its one end. A bag-shaped casing has then to be containing a pasty filling material, like an adhesive, has to be opened at one end and has then to be positioned in said rigid tube with its opened end facing the dispensing nozzle. A piston matching the inner diameter of the tube is pushed into the tube, thereby squeezing the bag-shaped packaging and dispensing the filling material through the dispensing nozzle.

With this known packaging combination, it is of disadvantage that the rigid tube has outer circumferential dimensions being such that the complete bag-shaped casing can be accomodated in said rigid tube. If this known packaging combination is provided as a disposable device, this solution is expensive due to the big rigid tube being made from relatively expensive plastics. If this known packaging combination used such that only bag-shaped casing is thrown away and the rigid tube is used several times, the bag-shaped casing must be opened outside the tube so that, when the opened bag-shaped casing is introduced in the rigid tube, filling material can accidently discharged and can pollute the environment.

Thus, it is an object of the present invention to provide a packaging combination, with which the above mentioned drawbacks have been overcome, and which allows an easy and save opening of the tubular casing.

According to the present invention, there is provided a packaging combination for accommodating and dispensing a viscous or granular filling material, the packaging combination comprises a tubular casing having a first and a second end, wherein the tubular casing is partially filled with filling material and closed at its first as well as its second end by a closure means, like a closure clip, wherein the partially filled tubular casing comprises a plait-like portion at its first end being at least approximately free of filling material. The packaging combination further comprises a dispensing device having a passageway extending through the dispensing device with an inlet opening at its one end and a dispensing opening at its other end for guiding and dispensing the filling material in a dispensing direction, and being attached to the first end of the partially filled and closed tubular casing. The plait-like portion of the tubular casing extends through the passageway and beyond the dispensing opening of the dispensing device such that the closure means closing said first end is arranged outside the dispensing opening.

This configuration of a packaging combination enables a safe and easy opening of the tubular casing by removing the closure means extending beyond the dispensing opening and dispensing the filling material just by squeezing the filled tubular casing portion. Thus, an accidental discharge of filling material due to the used to introduce the casing into a dispensing tube is invoided.

In an advantageous embodiment of the packaging combination according to the present invention, the dispensing device includes at least a first and a second portion, wherein the first portion extends from the inlet opening of the passageway in the dispensing direction and the second portion extends from the dispensing opening opposite to the dispensing direction, and wherein the inner circumferential dimensions of the first portion corresponds at least approximately to the outer circumferential dimensions of the tubular casing.

That means that the cross-section of the first portion of the dispensing device corresponds to the cross-section of the tubular casing, i.e. both, the first portion and the tubular casing, are of a circular cross-section, whereby the outer diameter of the tubular casing corresponds to the inner diameter of the first portion of the dispensing device. This allows a form-fit attachment of the dispensing device to the filled tubular casing. The term "circumferential dimension" has not only to be understood as the sole circumference, but also as a dimension characterizing a cross-section, like the length or width of a rectangle, a side length of a triangle or a diameter of a circle. Naturally, the first portion of the dispensing device and the tubular casing may be of any other suitable form, i.e. of a rectangular or triangular shape, the remarkable point is that their cross sections or circumferential dimensions correspond to each other.

In a further advantageous configuration, the inner circumferential dimensions of the second portion of the dispensing device are smaller than the inner circumferential dimensions of the first portion of the dispensing device. Thereby, the dispensing opening is smaller than the outer diameter of the tubular casing, which allows a more precise dispensing of the filling material.

In case that the first portion and the second portion of the dispensing device are coupled directly with each other, the dispensing opening is fixedly positioned relative to the second portion of the dispensing device and also to the tubular casing attached to the dispensing device.

According to the present invention, the packing combination includes a closure cap reversibly attachable to the dispensing device for releasing and closing the dispensing opening. A reversibly attachable closure cap reliably prevents the filling material from unintentionally escaping from the packaging combination and further allows storing and reusing an opened packaging.

For releasing and closing the dispensing opening by a closure cap, the dispensing device has an external screw thread at its outside and the closure cap has a corresponding internal screw thread at its inside for being attached to the external screw thread of the dispensing device. Alternatively, the dispensing device may have an internal screw thread at its inner surface. In this case, the closure cap has a corresponding outer screw thread at its outer surface. In this alternative constitution of the closure cap, its inner surface may be designed independently from said screw thread and may have any desired inner shape.

In an advantageous embodiment of the packaging combination, the closure cap has a clearance arranged inside the closure cap and behind the internal screw thread in the dispensing direction, for accommodating the first end of the closed tubular casing, when attached to the dispensing device. This clearance prevents the plait-like portion of the partially filled tubular casing from being pushed back into the dispensing device and allows an easy capturing the closure means attached to the plait-like portion and removing therefrom.

In a further advantageous embodiment of the inventive packaging combination, at least one cutting element is arranged inside the closure cap in a region between the threaded portion and the clearance. Said cutting element may automatically remove the closure means from the plait-like portion of the tubular casing, when being opened for the first time.

It has to be understood that the cutting element should be of a configuration to act only in one direction, namely the removal or screw-off direction to avoid a damaging of the plait-like portion when the closure cap is attached to the dispensing device. Thus, the at least one cutting element is adapted to cut-off the portion of the first end being provided with the closure means, from the tubular casing when the closure cap is removed from the dispensing device for the first time.

In a preferred constitution, an indicating unit for indicating the originality of the closure of the dispensing opening provided at the dispensing device. Alternatively, the indicating unit may be attached to the closure cap. Said indicating unit surely displays whether or not the inventive packaging combination has already been opened.

As mentioned above, the dispensing device is attached to the tubular casing for forming the inventive packaging combination. To avoid the dispensing device from dropping off from the tubular casing, the dispensing device is secured to the first end of the tubular casing by an adhesive, in particular, by a hot-melt adhesive. Naturally, in case that sensitive filling materials are filled into the tubular casing, other adhesive means, like an adhesive tape, may be used, which e.g. may not be heated.

In a further preferred embodiment, the packaging combination comprises a dispensing nozzle having an internal screw thread for being reversibly attachable to the external screw thread of the dispensing device. Said nozzle may at least partially have a cone-shape to be cut-off to adapt the size of the opening of said nozzle to the intended use.

The object of the present invention may also be solved by a dispensing device for being attached to a tubular casing to form a packaging combination according to the invention described above.

In particular, the axial length of the dispensing device can be much shorter than the axial length of the tubular casing. In case of a packaging combination comprising that dispensing device is provided as a disposable, the amount material which has to be thrown away is remarkably reduced compared to the material in the case of known packaging combinations as described previously. This will reduce costs for producing the packaging combination and will also protect the environment.

Moreover, the object of the present invention may further be reached by a tubular casing partially filled with a filling material and closed at its first as well as its second end by a closure means, like a closure clip, for being combined with a dispensing device to from a packing combination according to the invention described above.

Further advantages and a preferred embodiment will be described in the following together with the drawings listed below. The expressions "left", "right", "below" and "above" are referred to the drawings in an alignment such that the reference numbers used can be read in normal.

In the drawings:
- Fig.1:: is a perspective view to a first embodiment of the packaging combination according to the present invention;
- Fig. 2:: is a longitudinal-section to the embodiment of the packaging combi-nation of Fig. 1;
- Fig. 3:: is a perspective view to a second embodiment of the packaging combination according to the present invention; and
- Fig. 4:: is a longitudinal-section to the embodiment of the packaging combi-nation of Fig. 3.

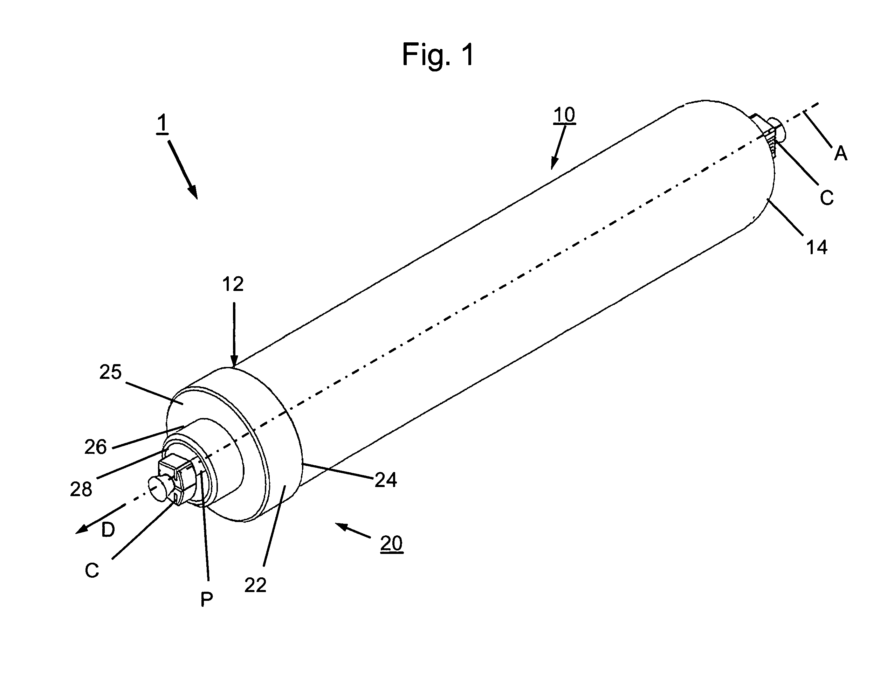

Fig. 1 shows a perspective view to a first embodiment of the packaging combination 1 according to the invention. The packaging combination 1 includes a sausage-shaped tubular casing 10 having a first end 12 and a second end 14 both closed by closure clips C, and a dispensing device 20 attached to the first end of 12 of tubular casing 10. Tubular casing 10 has a central axis A extending through first end 12 and second end 14. Dispensing device 20 has a first portion 22 including an inlet opening 24 and a second portion 26 including an outlet or dispensing opening 28. As it further can be seen in Fig. 1, first end 12 of tubular casing 10 has a plait-like portion P which extends through dispensing device 20 via inlet opening 24 and dispening opening 28. Thereby, closure clip C closing first end 12, projects from dispensing opening 28 in the dispensing direction D.

In the embodiment of packaging combination 1 according to Fig. 1, tubular casing 10 is of a circular cross-section. Accordingly, also dispensing device 20 is of a generally circular cross-section at least for the first portion 22. First portion 22 of dispensing device 20 has an inner and outer cylindrical shape having an inner diameter which corresponds to the outer diameter of tubular casing 10. Second portion 26 which also has an inner and outer cylindrical shape, is directly coupled to first portion 22 in the dispensing direction D via an annular offset 25. First portion 22, annular offset 25 and second portion 26 are coaxially arranged to central axis A of tubular casing 10. Moreover, the axial length of dispensing device 20 is clearly shorter than the axial length of the tubular casing 10. Thereby, dispensing device 20 is preferably made of plastics.

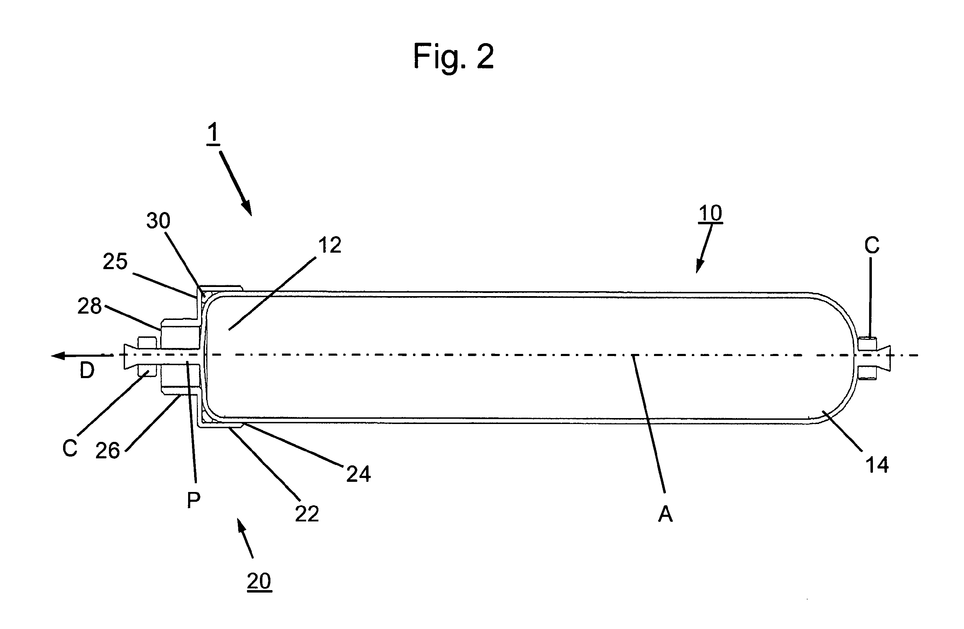

Fig. 2 shows a longitudinal-section along central axis A of the embodiment of the packaging combination 1 of Fig. 1. As it can be seen in Fig. 2, the outer diameter of tubular casing 10 corresponds to the inner diameter of the first portion 22 of dispensing device 20. Annular offset 25 and first portion 22 are approximately rectangular aligned to each other, thereby forming a flange surrounding the outer edge of first end 12 of tubular casing 10. Between inlet opening 24 and dispensing opening 28, then extends a passageway formed by the inner walls of the first and second portion 22, 26 of the dispensing device 20.

For fixedly attaching dispensing device 20 to tubular casing 10, an adhesive 30, preferably a hot-melt adhesive, is disposed at the inside of the flange formed by annular offset 25 and first portion 22. The amount of adhesive 30 is sufficient for at least approximately filling the gap between first end 12 of tubular casing 10, annular offset 25 and first portion 22 of dispensing device 20.

Plait-like portion P at the first end 12 of tubular casing 10, which is at least approximately free from filling material and which has been formed in a known manner during filling and closing tubular casing 10, has a length that corresponds to the axial length of the second portion 26 of dispensing device 20. The length of plait-like potion P is at least equal to the axial length of the second portion 26 of dispensing device 20 in order to ensure that closure clip C closing the first end 12 of tubular casing 10 projects from outlet opening 28 of dispensing device 20 in the dispensing direction D. It has to be understood that, for attaching dispensing device 20 to first end 12 of tubular casing 10, the inner diameter of the second portion 26 of dispensing device 20, forming the dispensing opening 28, has to be at least slightly larger than the outer diameter of the closed closure clip C attached to first end 12. Accordingly, in order to open the packaging combination 1, closure clip C of first end 12 may be gripped and removed from first end 12 of tubular casing 10 and the filing material stored in tubular casing 10 may be dispensed by squeezing tubular casing 10.

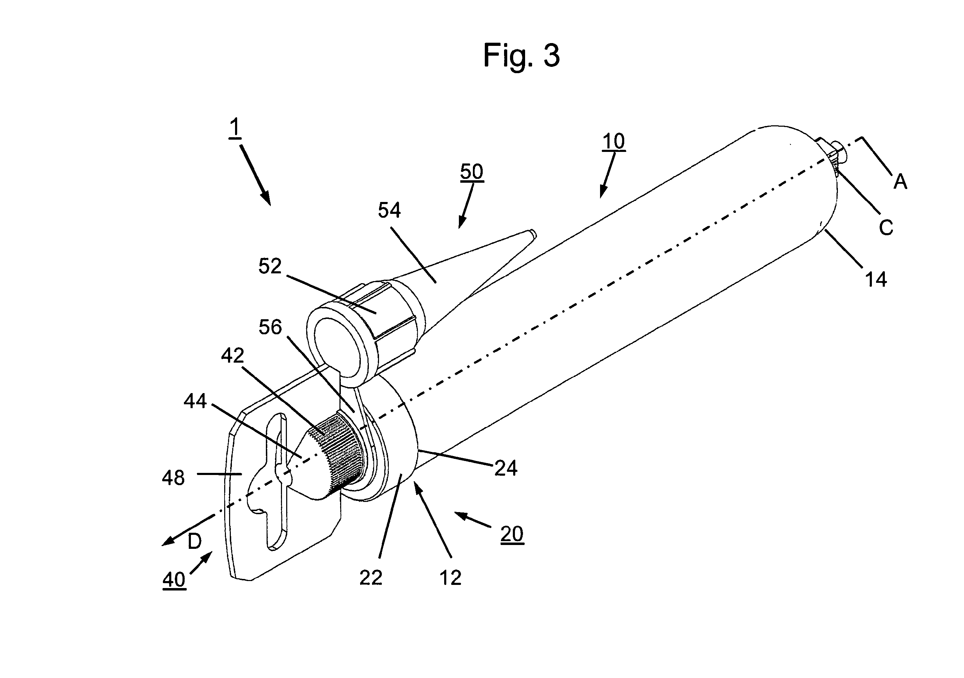

A second embodiment of packaging combination 1 is shown in Fig. 3. This packaging combination 1 includes the tubular casing 10 having a first end 12, a second end 14 as well as a plait-like portion P and the dispensing device 20 having a first portion 22 including an inlet opening 24 and a second portion 26 including an outlet opening 28, both known from the embodiment according to Figs. 1 and 2.

Additionally, the packaging combination 1 includes a closure cap 40 for closing dispensing opening 28 of dispensing device 20 and a dispensing nozzle 50 for being attached to the dispensing opening 28, in order to dispense a desired amount of filling material.

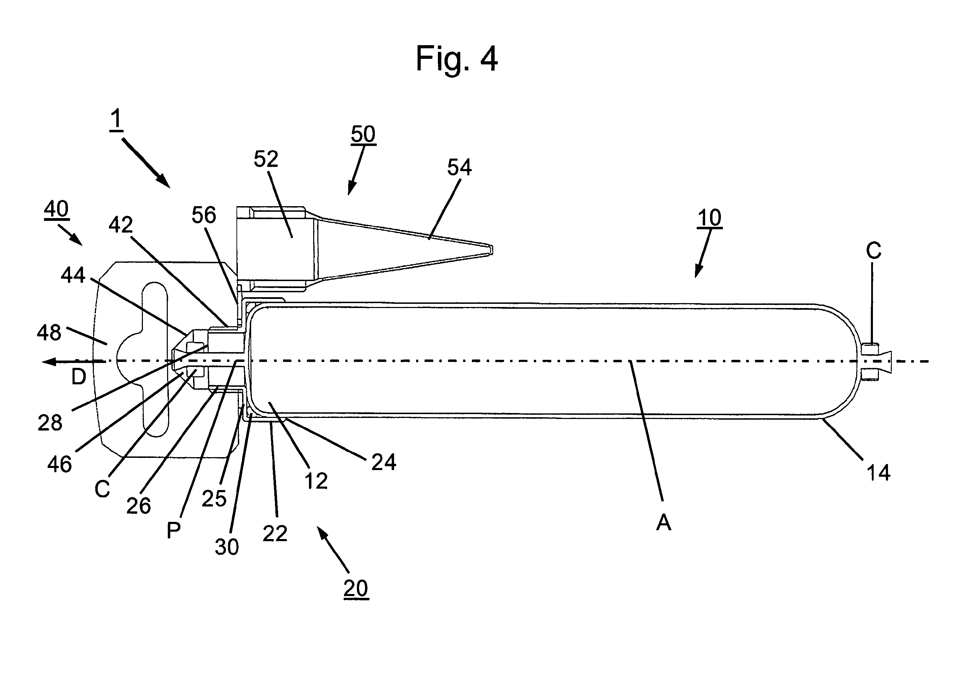

Closure cap 40 includes a cylindrical portion 42 having a first end 42a and a second end 42b and a conical portion 44 being attached to second end 42b of cylindrical portion 42. As it can be seen in Fig. 4, which is a longitudinal-section to the embodiment of the packaging combination 1 of Fig. 3, the inner diameter of cylindrical portion 42 corresponds to the outer diameter of second portion 26 of dispensing device 20. The axial length of cylindrical portion 42 is at least approximately equal to the axial length of second portion 26 of dispensing device 20. As it can be seen in Fig. 4, cylindrical portion 42 is slightly longer than cylindrical portion 42. Together with hollow conical portion 44, inside closure cap 40, a clearance 46 is provided for accommodating the first end 12 of tubular casing 10 or at least closure clip C closing said first end 12 and extending beyond dispensing opening 28 in the dispensing direction D, when closure cap 40 is attached to dispensing device 20.

In order to reversibly attach and release closure cap 40 to or from dispensing device 20, in particular to or from second portion 26 of dispensing device 20, an inner screw thread is provided at the inner surface of cylindrical portion 42 of closure cap 40, which matches with an outer screw thread provided at the outer surface of second portion 26 of dispensing device 20.

Closure cap 40 according to Figs. 3 and 4 further comprises a flat fin member 48 arranged in a plane extending through longitudinal axis A of tubular casing 10, when being attached to dispensing device 20. Flat fin member 48 is coupled to the outside of cylindrical portion 42 and conical portion 44, and includes an opening arranged above conical portion 44 in the dispensing direction D. Fin member 48 thereby forms a hanger. For an easier opening of closure cap 40, the outer surface of cylindrical portion 42 is provided with grooves extending parallel to axis A.

As mentioned above, packaging combination 1 of Figs. 3 and 4 further includes dispensing nozzle 50. Dispensing nozzle 50 has a hollow cylindrical portion 52 and a hollow conical portion 54 coupled to cylindrical portion 52. At the inner surface of cylindrical portion 52, an inner screw thread is provided matching with outer screw thread of second portion 26 of dispensing device 20 for reversibly attaching dispensing nozzle 50 thereto. Hollow conical portion 54 is open at its one end, which is coupled to conical portion 54 and closed at its other end forming a tip. In order to allow filling material to be dispensed through dispensing nozzle 50, the tip has to be cut off. The size or diameter of the dispensing opening of nozzle 50 depends on the position of the cutoff at conical portion 54 of dispensing nozzle 50. Nozzle 50 further comprises a flap element 56 extending radially from cylindrical portion 52 and including a circular opening for securing dispensing nozzle 50 to second portion 26 of dispensing device 50.

Closure cap 40 may comprise at least one cutting element (not shown) for cutting of closure clip C closing the first end 12 of tubular casing 10. Said cutting element may be arranged inside closure cap 40 in a region between cylindrical portion 42 and conical portion 44 in order to cut-off closure clip C of the first end 12 when closure cap 40 is released from packaging combination 1 for the first time. To enable this, and in order to prevent cutting-off of closure clip C from first end 12 when closure cap 40 is attached to packaging combination 1 for the first time, the cutting element is a one-directional acting cutting element, like a blade having only one cutting edge.

The packaging combination 1 according to the present invention further comprises an indicating unit (not shown) for indicating the originality of the closure of the dispensing opening. Said indicating unit may have the form of a small sheet attached to the dispensing device 20, e.g. at the outside of annular offset 25 for being coupled with closure cap 40 when being closed for the first time. When opening originally closed packaging combination 1, the indicating unit is removed from closure cap 40 and/or from annular offset 25 of dispensing device 20, indicating that packaging combination 1 is not originally closed anymore, and further indicating, in case of the presence of a cutting element inside closure cap 40, that tubular casing 10 is opened and that filling material may escape from packaging combination 1 when releasing closure cap 40. The indicating unit may also be originally attached to the closure cap 40 and may than be coupled to dispensing device 20 when being closed for the first time. Naturally, an indicating unit may also be attached to any other suitable part of the packaging combination, where its possible to indicate the originality of the closure of the dispensing device or at least of the dispensing opening.

Adhesive 30 provided at the inside of the flange formed by annular offset 25 and first portion 22 in order to secure dispensing device 20 to the first end 12 of tubular casing 10 has been described as being a hot-melt adhesive. Dependent on the material of tubular casing, which may be a suitable plastic foil or a natural material, the material of dispensing device 20, which is preferably made of plastic but also from any other suitable material, like a metal, the adhesive 30 may also be an other than a hot-melt adhesive. E.g. in case of temperature sensitive filling materials or casing material, a cold acting adhesive is required.

The plait-like portion P has been described and shown as at least approximately free from filling material. In specific cases, in particular when using a soft casing material or a fluid filling material, plait-like portion P may contain a small amount of filling material. With regard to the present invention, it is remarkable that the diameter of the plait-like portion P is smaller than the dispensing opening 28 of second portion 26 of dispensing device 20, and that the length of plait-like portion P is sufficient to allow closure clip C closing the first end 12 of tubular casing 10 to project from dispensing opening 28 in the dispensing direction D.

In conjunction with Figs. 1 to 4, tubular casing 10 has been described as having a circular cross section. Naturally, the casing 10 containing the filling material may be of any other suitable cross-section, like a rectangular or triangular cross-section. Accordingly, also at least the first portion 22 of dispensing device 20 should also have a corresponding cross-section to be form-fit attached to the casing 10.

For being dispensable by dispensing device 20, the filling material should be of a respective consistency, e.g. pasty, fluid or granular. Accordingly any filling material being of said consistency, may be packed and dispensed by the packaging combination 1 of the present invention, chemical filling materials, like silicone or grease, as well as food stuff, like sausage meat or the like.

As described above, the present packaging combination 1 may be used without the need of any dispensing or pressing tools. Naturally, in particular when having a tubular casing of a circular cross section, known dispensing or pressing tools may be used to dispense the filling material from the inventive packaging combination.

## Claims

1. A packaging combination for accommodating and dispensing a viscous or granular filling material, the packaging combination (1) comprises a tubular casing (10) having a first end (12) and a second end (14), wherein the tubular casing (10) is partially filled with filling material and closed at its first as well as its second end (12, 14) by a closure means (C), like a closure clip, wherein the partially filled tubular casing (10) comprises a plait-like portion (P) at its first end (12) being at least approximately free of filling material, the packaging combination (1) further comprises a dispensing device (20) having a passageway extending through the dispensing device (20) with an inlet opening (24) at its one end and a dispensing opening (28) at its other end for guiding and dispensing the filling material in a dispensing direction (D), and being attached to the first end (12) of the partially filled and closed tubular casing (10), wherein the plait-like portion (P) of the tubular casing (10) extends through the passageway and beyond the dispensing opening (28) of the dispensing device (20) such that the closure means (C) closing said first end (12) is arranged outside the dispensing opening (28).

2. The packaging combination according to any of claim 1,
wherein the dispensing device (20) includes at least a first and a second portion (22, 26), wherein the first portion (22) extends from the inlet opening (24) of the passageway in the dispensing direction (D) and the second portion (26) extends from the dispensing opening (28) opposite to the dispensing direction (D), and wherein the inner circumferential dimensions of the first portion (22) corresponds at least approximately to the outer circumferential dimensions of the tubular casing (10).

3. The packaging combination according to any of claim 2,
wherein the inner circumferential dimensions of the second portion (26) are smaller than the inner circumferential dimensions of the first portion (22).

4. The packaging combination according to any of claims 2 or 3,
wherein the first portion (22) and the second portion (26) are coupled directly with each other.

5. The packaging combination according to any of claims 1 to 4,
wherein it is provided a closure cap (40) reversibly attachable to the dispensing device (20) for releasing and closing the dispensing opening (28).

6. The packaging combination according to claim 5,
wherein the dispensing device (20) has an external screw thread at its outside and the closure cap (40) has a corresponding internal screw thread at its inside, or wherein the dispensing device (20) has an internal screw thread at its inside and the closure cap (40) has a corresponding external screw thread at its outside for being attached to the dispensing device (20).

7. The packaging combination according to claim 6,
wherein the closure cap (40) has a clearance (46) arranged inside the closure cap (40) and behind the internal screw thread in the dispensing direction (D), for accommodating the first end (12) of the closed tubular casing (10), when attached to the dispensing device (20).

8. The packaging combination according to claim 7,
wherein at least one cutting element is arranged inside the closure cap (20) in a region between the threaded portion and the clearance (46).

9. The packaging combination according to claim 8,
wherein the at least one cutting element is adapted to cut-off the portion of the first end (12) being provided with the closure means (C), from the tubular casing (10) when the closure cap (40) is removed from the dispensing device (20) for the first time.

10. The packaging combination according to any of claims 1 to 9,
wherein an indicating unit for indicating the originality of the closure of the dispensing opening (28) provided at the dispensing device (20).

11. The packaging combination according to claim 10,
wherein the indicating unit is attached to the closure cap (40).

12. The packaging combination according to any of claims 1 to 11,
wherein the dispensing device (20) is secured to the first end (12) of the tubular casing (10) by an adhesive (30), in particular, by a hot-melt adhesive.

13. The packaging combination according to any of claims 6 to 11,
further comprising a dispensing nozzle (50) having an internal screw thread for being reversibly attachable to the external screw thread of the dispensing device (20).

14. A dispensing device for being attached to a tubular casing (10) to form a packaging combination according to any of claims 1 to 13.

15. A tubular casing partially filled with a filling material and closed at its first as well as its second end (12, 14) by a closure means (C), like a closure clip, for being combined with a dispensing device to form a packaging combination according to any of claims 1 to 13.
